# EUROPÄISCHE PATENTSCHRIFT

(11) **EP 3 711 392 B1**
(45) Veröffentlichungstag und Bekanntmachung des Hinweises auf die Patenterteilung: **12.07.2023**
(21) Anmeldenummer: 18769601.8
(22) Anmeldetag: 31.08.2018
(51) Int. Cl.: H04W 64/00

(54) **VERFAHREN UND VORRICHTUNG ZUR POSITIONSBESTIMMUNG**
METHOD AND DEVICE FOR POSITION DETERMINATION
PROCÉDÉ ET DISPOSITIF DE DÉTERMINATION DE POSITION

(30) Priorität: 15.11.2017 DE 102017126861
(43) Veröffentlichungstag der Anmeldung: 23.09.2020
(73) Patentinhaber: Inpixon, Palo Alto, CA 94303 (US)
(72) Erfinder: BUCKO, Michal, 10967 Berlin (DE); VAHDAT-PAJOUH, Darius, 13357 Berlin (DE)
(74) Vertreter: Cohausz & Florack
(86) Internationale Anmeldenummer: PCT/EP2018/073445
(87) Internationale Veröffentlichungsnummer: WO 2019/096458

(56) Entgegenhaltungen:
- WO-A1-01/49056
- LASSE KLINGBEIL ET AL: "Multi-modal sensor data and information fusion for localization in indoor environments", POSITIONING NAVIGATION AND COMMUNICATION (WPNC), 2010 7TH WORKSHOP ON, IEEE, PISCATAWAY, NJ, USA, 11. März 2010 (2010-03-11), Seiten 187-192, XP031815261, ISBN: 978-1-4244-7158-4
- TOMOKAZU SATO ET AL: "Camera position and posture estimation from still image using feature landmark database", SICE ANNUAL CONFERENCE, 2008, IEEE, PISCATAWAY, NJ, USA, 20. August 2008 (2008-08-20), Seiten 1514-1519, XP031351370, ISBN: 978-4-907764-30-2

## Beschreibung

Der Gegenstand betrifft ein Verfahren zur Positionsbestimmung eines mobilen Gerätes sowie ein mobiles Gerät, eingerichtet zur Durchführung einer Positionsbestimmung, als auch ein Applikationsprogramm zur Durchführung einer Positionsbestimmung.

Positionsbestimmung, insbesondere Indoor-Positionsbestimmung, ist hinlänglich bekannt. Es ist bekannt, mit Hilfe von Indoor-Positionsbestimmungsverfahren eine Position eines mobilen Gerätes in einem Raum zu bestimmen. Die Indoor-Positionsbestimmung unterscheidet sich von der Outdoor-Positionsbestimmung dadurch, dass bei der Indoor-Positionsbestimmung keine GPS-Signale oder sonstige Satellitensignale zur Verfügung stehen, mit deren Hilfe mittels Triangulation und Zeitinformationen eine Position eines Gerätes bestimmt werden kann. Solche Signale stehen Indoor nicht zur Verfügung. Daher werden bei der Indoor-Positionsbestimmung zumeist Informationen zu Feldstärken und Netzkennungen von Funknetzen verwendet, um die Position zu bestimmen.

Darüber hinaus ist für die Indoor-Navigation eine möglichst exakte Positionsbestimmung notwendig. Bekannte Verfahren sind in einigen Anwendungsfällen ungeeignet, da die Positionsbestimmung nicht exakt genug ist. Positionsbestimmung basierend auf Funktechnologie, beispielsweise WLAN oder Bluetooth, weist eine Genauigkeit von +/- 2 Metern auf. Dies ist in vielen Fällen ausreichend, jedoch gibt es Anwendungsfälle, in denen eine Positionsbestimmung genauer sein muss.

Insbesondere im Bereich des Handels, beispielsweise Einzel-/oder Großhandel, sind auf engstem Raum Unmengen an Produkten verfügbar. Möchte man den Produkten Informationen mit Hilfe von Augmented-Reality zuordnen, so ist es notwendig, die Position des Gerätes im Raum, insbesondere relativ zu den Produkten, mit einer höheren Genauigkeit bestimmen zu können, als dies bisher möglich ist.

Aus der Veröffentlichung "LASSE KLINGBEIL ET AL: Multi-modal sensor data and information fusion for localization in indoor environments", POSITIONING NAVIGATION AND COMMUNICATION (WPNC), 2010 7TH WORKSHOP ON, IEEE, PISCATAWAY, NJ, USA, 11. März 2010 (2010-03-11), Seiten 187-192, XP031815261, ISBN: 978-1-4244-7158-4" ist ein Verfahren zur Positionsbestimmung eines mobilen Gerätes in einem Ladenlokal, basierend auf einer Kombination verschiedener Sensoreingangssignale bekannt. Die Position des mobilen Gerätes in einem Raum wird dabei zunächst unter Verwendung zumindest eines ersten

lnnenraumpositionierungsverfahrens (wie z.B eines RadiofrequenzPositionierungsverfahrens oder eines Magnetfeldpositionierungsverfahrens) bestimmt. Als ein mögliches Sensoreingangssignal werden die von einer Kamera gelieferten Informationen markanter Punkte, wie Ecken, Farben oder anderer optischer Marker erwähnt, die mit einer sog. "feature map" dem Algorithmus zur Positionsbestimmung gespeist werden können.

Aus diesem Grunde lag dem Gegenstand die Aufgabe zugrunde, eine Positionsbestimmung mit einer erhöhten Genauigkeit, insbesondere für Ladenlokale, zur Verfügung zu stellen. Diese Aufgabe wird durch Verfahren nach Anspruch 1 und 9 sowie ein mobiles Gerät nach Anspruch 13 als auch ein Applikationsprogramm nach Anspruch 14 gelöst.

Die Erfindung wird durch alle in den unabhängigen Ansprüchen enthaltenen und erforderlichen Merkmale definiert, die den Umfang der Erfindung definieren und Ausführungsformen der Erfindung darstellen. Weitere Merkmale von beispielhaften Ausführungsformen sind in den abhängigen Ansprüchen definiert. Der Gegenstand der folgenden Beschreibung und Abbildungen, auch wenn er als "Ausführungsform(en)", "Erfindung(en)", "Aspekt(e)", "Beispiel(e)" oder "Offenbarung(en)" usw. bezeichnet wird, entspricht nicht oder nicht vollständig und somit nur teilweise der in den Ansprüchen definierten Erfindung (z. B. aufgrund eines oder mehrerer Merkmale, die in den unabhängigen Ansprüchen vorhanden und erforderlich sind und die in der "Ausführungsform(en)", "Erfindung(en)", "Aspekt(en)", "Beispiel(en)" oder "Offenbarung(en)" usw. fehlen, zum Beispiel durch die Verwendung von Ausdrücken wie "oder", "Alternative", "alternativ", "vorzugsweise", "bevorzugt", "kann", "könnte", "als/zum Beispiel", "beispielsweise" usw., und die dadurch ein oder mehrere in den unabhängigen Ansprüchen enthaltene und erforderliche Merkmale ersetzen und/oder ein oder mehrere in den unabhängigen Ansprüchen enthaltene und erforderliche Merkmale als optional darstellen). Der Gegenstand der folgenden Beschreibung und der Abbildungen fällt daher entweder nicht unter den Gegenstand, für den Schutz beantragt wird, oder wird vom Wortlaut der Ansprüche nicht erfasst, wird aber als nützlich für das Verständnis der Erfindung angesehen.

Die Erfinder haben herausgefunden, dass eine Kombination verschiedenster Sensoreingangssignale dazu verwendet werden kann, die Genauigkeit der Positionsbestimmung zu erhöhen. Zunächst einmal ist es möglich, mittels Innenraumpositionierungsverfahren eine Position in einem Raum zu bestimmen. Diese Innenraumpositionierungsverfahren verwenden beispielsweise Funkfrequenzen, Radiofrequenzen, Magnetfelder oder dergleichen und sind hinlänglich bekannt. Wie eingangs bereits erläutert, sind diese Innenraumpositionierungsverfahren (Indoor-Positionierung) jedoch zu ungenau für bestimmte Anwendungen, insbesondere für Anwendungen im Handel.

Die Erfinder haben überraschenderweise erkannt, dass mit Hilfe von Bildvergleichen die Positionsgenauigkeit erhöht werden kann. Somit wird gegenständlich vorgeschlagen, dass zusätzlich zu der Position des mobilen Gerätes, welche mit dem Innenraumpositionierungsverfahren bestimmt wurde, eine Bildinformation mit dem mobilen Gerät erfasst wird.

Eine Bildinformation kann ein Bild sein, welches mit einer Kamera des mobilen Gerätes erfasst werden kann. Insbesondere eine Frontkamera eines mobilen Gerätes, beispielsweise eines Smartphones eignet sich dazu, die Umgebung zu erfassen. Die Bildinformation kann ein einzelnes Bild, eine Reihe von Bildern oder ein Bewegtbild sein.

Unter Verwendung dieser Bildinformation ist es möglich, die zunächst bestimmte Position anzupassen. Hierzu wird die erfasste Bildinformation mit einem simulierten Abbild des Raumes verglichen und abhängig von dem Vergleich die zunächst bestimmte Position eingepasst.

Für das simulierte Abbild kann der Raum zunächst als virtuelle Realität modelliert sein. D.h., dass der Raum virtuell in einem Computer abgebildet ist. Bei dieser Abbildung kann der Raum nicht nur durch seine Außenwände, seinen Boden und seine Decke modelliert sein, sondern auch Objekte innerhalb des Raumes können modelliert sein. Der modellierte Raum entspricht dem Raum, in dem die Positionsbestimmung durchgeführt werden soll.

Vergleicht man nun ein Bild des mobilen Gerätes mit einem simulierten Abbild, kann festgestellt werden, ob das durch das mobile Gerät erfasste Bild zu dem simulierten Abbild an der angenommenen Position passt. Falls eine Abweichung vorliegt, ist die zunächst bestimmte Position gegebenenfalls nicht richtig und eine Positionsverschiebung in zumindest einer Richtung, beispielsweise entlang der Ebene des Bodens des Raumes, kann dazu führen, dass das simulierte Abbild genauer zu dem erfassten Bild des mobilen Gerätes passt.

Sobald die Position angepasst wurde, ist es möglich, mit dieser genaueren Position weitere Dienste zu verknüpfen, wie beispielsweise einen Augmented-Reality Dienst. Hierbei kann dann in das Bild, welches auf dem mobilen Bild erfasst und auf einem Display des mobilen Gerätes angezeigt wird, eine virtuelle Information eingeblendet werden, die zu der aktuellen, genauen Position passt. Dies ist insbesondere im Einzel- und Großhandel von Interesse. Anhand der angepassten Position kann festgestellt werden, welche Produkte sich im aktuellen Bild befinden und das Bild kann durch Zusatzinformationen zu diesen Produkten angereichert werden und als Augmented-Reality Bild auf dem Display angezeigt werden.

Auch ist es möglich, die erfasste und/oder angepasste Position, das erfasste Bild und eine Identifikation des mobilen Gerätes zu erfassen und über ein Datennetz, insbesondere ein Funknetz an eine Zentrale zu übermitteln. In der Zentrale kann dann z.B. durch einen Bildvergleich ermittelt werden, ob das erfasste Bild zu der Position passt. Auch kann die Identifikation des Gerätes überpüft werden. Abhängig von der Überprüfung und des Bildvergleichs kann z.B. eine Aktion ausgelöst werden. So ist es z.B. möglich, festzustellen, ob ein bestimmtes Gerät an einem bestimmten Ort ist. Dies kann als Authorisierungsinformation dazu genutzt werden, um ggf. Zugangsbeschränkungen aufzuheben oder Zahlungsabwicklungen zu ermöglichen.

Wie bereits erläutert, ist die Innenraumpositionierung an sich bekannt. Zu den gängigsten und gegenständlich auch verwendeten Verfahren gehören insbesondere Radiofrequenzpositionierungsverfahren, Magnetfeldpositionierungsverfahren und/oder Akustikpositionierungsverfahren. Bei den Radiofrequenzpositionierungsverfahren sind insbesondere die Verfahren unter Verwendung von WLAN oder Bluetooth zu nennen. Bei diesen Verfahren werden Feldstärken von WLAN oder Bluetooth-Sendern erfasst und mittels Triangulation und in Kenntnis der Position der entsprechenden Sender eine Position bestimmt.

Bei den Magnetfeldpositionierungsverfahren können insbesondere Magnetfelder von passiven Bauelementen erfasst werden und entsprechend ausgewertet werden.

Bei Akustikpositionierungsverfahren kann beispielsweise durch Aussenden eines Schallimpulses und Auswerten des Echos eine Position in einem Raum bestimmt werden.

Mit Hilfe dieser und weiterer Innenraumpositionierungsverfahren kann zunächst die Position des mobilen Gerätes im Raum mit einer Unschärfe von ca. +/- 2 Metern bestimmt werden. Diese Unschärfe führt jedoch dazu, dass die so erfasste Position für bestimmte Augmented-Reality Dienste ungeeignet ist, insbesondere im Bereich des Einzel- oder Großhandels. Gerade in Räumen, in denen eine große Anzahl an Objekten, beispielsweise mehrere Tausend, vorzugsweise mehr als zehntausend Objekte auf einer Fläche von wenigen 100m² angeordnet sind, ist eine exakte Positionsbestimmung notwendig.

Die Innenraumpositionierungsverfahren kann auch mehrstufig durchgeführt werden. Dabei kann z.B. zunächst ein oben genanntes Positionierungsverfahren, insbesondere eines basierend auf Radiofrequenzen, z.B. Bluetooth verwendet werden. Dieses Verfahren kann optimiert werden, wenn basierend auf der so zunächst erfassten Position des mobilen Gerätes diese Positionsgenauigkeit durch ein zusätzliches Verfahren ergänzt wird. Dabei kann z.B. nachdem ein erstes Innenraumpositionierungsverfahren verwendet wurde, zunächst ein zweites, insbesondere auf 3D Sensoren basierendes Positionierungsverfahren verwendet werden, mit denen die zunächst erkannte Position genauer erkannt wird.

Ein 3D Sensor kann z.B. ein 3-D Lasersensor, ein Time-of-Flight Sensor oder ein Kamerasensor sein. Diese 3D Sensoren sind an sich bekannt. Mit Hilfe des 3D Sensors wird im Bereich der zunächst erkannten Position nach Objekten gesucht, die Personen darstellen. In dem Bereich, der zunächst als Position erkannt wurde, können sich mehrere Objekte aufhalten, die die "Zielperson" sein könnten, bzw. die das mobile Gerät tatsächlich bei sich tragen.

Mit Hilfe des mobilen Gerätes bzw. des darauf installierten Applikationsprogrammes können Bewegungsdaten erfasst werden. Insbesondere können nachfolgend beschriebene Intertialsensoren, Accelerometer und/oder Neigungssensoren zum Einsatz kommen. Mit diesen in dem mobilen Gerät angeordneten Sensoren lassen sich Bewegungsinformationen erfassen.

Die Bewegungsinformationen können mit den Informationen des 3D Sensors verknüpft werden. Mit dem 3D Sensor können Objekte erfasst werden. Sobald ein Objekt erfasst wurde, kann erfasst werden, ob und/oder wie sich ein Objekt bewegt. Verknüpft man diese Bewegungsinformationen von dem 3D Sensor mit den Bewegungsinformationen des Sensors des mobilen Gerätes, die z.B. per Funk an eine Zentrale übermittelt werden können, so können zwischen diesen Informationen Korrelationen detektiert werden. So ist es z.B. möglich, festzustellen, bei welchem Objekt sowohl die Sensoren des mobilen Gerätes als auch die 3D Sensoren zu einem bestimmten Zeitpunkt eine Bewegung detektieren und insbesondere eine bestimmte Art der Bewegung detektieren. Somit ist es möglich, wenn die miteinander verglichenen Bewegungsinformationen gleich oder einander ähnlich sind, dasjenige Objekt des 3D Sensors zu bestimmten, welches das mobile Gerät mit sich führt.

Anschließend kann mit dem 3D Sensor die Position des Objektes bestimmt werden. Diese erste, zunächst erkannte Position hat eine verbesserte Auflösung als bei der Verwendung nur der ersten Innenraumpositionierung.

Gegenständlich wird eine Position zwei- oder dreidimensional bestimmt. Die einfachste Positionsbestimmung ist zweidimensional in einer Ebene parallel zum Fußboden des Raumes. Diese Ebene ist durch die X- und Y-Achsen, die senkrecht zueinander stehen, aufgespannt. Eine dritte Dimension durch eine Z-Achse ausgespannt werden, welche senkrecht zu der X- und der Y-Achse steht.

Der Vergleich der erfassten Bildinformationen mit zumindest einem simulierten Abbild des Raumes kann auf unterschiedlichste Weise erfolgen. Insbesondere kann das Bild in Blocks, Makroblocks oder dergleichen unterteilt werden und es kann ein Vergleich von Informationen, beispielsweise von Helligkeitsinformationen, Farbinformationen, Kanteninformationen oder dergleichen der Blocks in dem erfassten Bild mit Blocks in einem simulierten Abbild durchgeführt werden. Solche Best-Match-Verfahren sind insbesondere aus der Videokompression bekannt, insbesondere zur Bestimmung von sogenannten Bewegungsvektoren (motion vector). Die aus dem Videokodierungsverfahren bekannten Methoden zum Vergleichen von Bildern und/oder Blöcken werden gegenständlich umfasst.

Ein Block bzw. ein Makroblock kann aus einer Anzahl an Pixeln, beispielsweise 4x4 Pixel, 8x8 Pixel, 16x16 Pixel oder dergleichen gebildet werden. Für einen Block kann beispielsweise eine Helligkeitsinformation, eine Farbinformation oder dergleichen ermittelt werden. Diese Information kann mit Informationen von Blocks aus dem simulierten Abbild, insbesondere räumlich benachbarten Blocks des simulierten Abbilds verglichen werden, so dass ein solcher Block in dem simulierten Abbild gefunden werden kann, der die geringste Abgleichung von dem Block in dem Bild aufweist.

Mit Hilfe dieser Information ist es möglich, einen Verschiebungsvektor zu bestimmen. Der Verschiebungsvektor kann dabei beispielsweise durch den Abstand der als ähnlich befundenen Blocks zwischen der erfassten Bildinformation und dem simulierten Abbild bestimmt werden.

Im Anschluss kann das Anpassen der ersten Position abhängig von dem Vergleich durch den so bestimmten Bewegungsvektor durchgeführt werden. Weicht das tatsächliche Bild von dem simulierten Abbild ab, wurde das simulierte Abbild auf Grundlage einer falschen Position berechnet. Die Verschiebung zwischen dem Abbild und der erfassten Bildinformation gibt eine Auskunft darüber, wie die Position angepasst werden muss. Daher wird vorgeschlagen, dass die Position abhängig von dem Vergleich angepasst wird. Insbesondere wird die Position abhängig von dem bestimmten Verschiebungsvektor verschoben.

Das Bestimmen der Position des mobilen Geräts unter Verwendung eines Innenraumpositionierverfahrens kann insbesondere die Verwendung eines Radiofrequenzpositionierungsverfahrens umfassen. Bei einem solchen Verfahren werden insbesondere Feldstärken und Netzkennungen ausgewertet. Unter Verwendung von Feldstärken und Netzkennung kann in Kenntnis der Position von bestimmten Netzen eine Position bestimmt werden. Solche Verfahren sind hinlänglich bekannt. Auch die Verwendung von Magnetfeldpositionierungsverfahren, die insbesondere Magnetfeldstärken auswerten, können verwendet werden. Darüber hinaus können aus Akustikpositionierungsverfahren verwendet werden, die insbesondere in der Art eines Echolots oder Sonars arbeiten. Diese Position kann genauer bestimmt werden unter Verwendung eines zusätzlichen 3D Sensors und der Verknüpfung von Bewegungsinformationen des mobilen Gerätes mit Bewegungsinformationen eines 3D Sensors.

Für die Simulation des Abbildes des Raumes kann es sinnvoll sein, nicht nur die Positionierung des mobilen Gerätes, sondern auch Ausrichtungsinformationen des mobilen Gerätes zu kennen. Aus diesem Grunde wird zusammen mit der Bildinformation eine Ausrichtungsinformation des mobilen Gerätes erfasst. Eine Ausrichtungsinformation kann beispielsweise durch einen Kompass und/oder ein Gyroskop erfasst werden. Dabei können insbesondere einerseits die Ausrichtung und andererseits die Neigung des mobilen Gerätes bestimmt werden. Dadurch ist es möglich, beispielsweise die Richtung der optischen Achse der Bildaufnahmeeinrichtung des mobilen Gerätes zu bestimmen. Eine Bildaufnahmeeinrichtung des mobilen Gerätes kann eine Kamera, insbesondere eine Fotokamera und/oder eine Filmkamera sein bzw. ein Fotosensor mit Optik sein.

Die optische Achse weist in eine Richtung, die durch die Ausrichtung als auch die Lage des mobilen Gerätes bestimmt ist. Anhand dieser Information, insbesondere anhand der Kenntnis des Richtungsvektors, welcher die optische Achse der Bilderfassungseinrichtung beschreibt, kann das Abbild des Raumes mit einer höheren Präzision simuliert werden. Es wird simuliert, wie ein Bild aussehen müsste, welches ausgehend von der bestimmten Position unter Verwendung der Blickrichtung bzw. der optischen Achse des mobilen Gerätes bzw. der darin angeordneten Bilderfassungseinrichtung erfasst wird. Dieses simulierte Abbild wird mit den tatsächlichen Bildinformationen verglichen. Eine Verschiebung zwischen dem Abbild und dem Bild kann, wie oben beschrieben, bestimmt werden.

Auch ist erkannt worden, dass ein Nutzer sich mit einem mobilen Gerät innerhalb des Raumes bewegt, eine Positionsbestimmung jedoch nicht zu jedem Zeitpunkt erfolgt. Zwischen einem Zeitpunkt einer Positionsbestimmung und einem aktuellen Zeitpunkt, zu dem die Bildinformation erfasst wird, kann sich das mobile Gerät bewegt haben. So ist es beispielsweise möglich, zunächst eine Position zu bestimmen. Anschließend wird die Bildinformation erfasst, wobei jedoch zwischen dem Zeitpunkt der Positionsbestimmung und dem Zeitpunkt des Erfassens der Bildinformation das mobile Gerät bewegt wurde.

Die Verschiebung des mobilen Gerätes kann mittels eines Inertialsensors, beispielsweise eines Accelerometers bestimmt werden. Durch Auswertung von Beschleunigungsinformationen kann eine Bewegungsinformation bestimmt werden. Somit ist es möglich, zunächst die Positionsinformation abhängig von den Bewegungsinformationen anzupassen und erst dann abhängig von der neu berechneten Position das simulierte Abbild zu berechnen.

In diesem Fall wird bevorzugt erst in dem zweiten Zeitpunkt die Ausrichtungsinformation zur Verfügung gestellt. Auch die Ausrichtungsinformation kann durch die Inertialsensoren beeinflusst werden. Durch das Auswerten und Verwenden von Bewegungsinformationen wird die Positionsbestimmung verbessert. Insbesondere kann eine Verschiebung zwischen einem simulierten Abbild und der erfassten Bildinformation verringert werden, da das simulierte Abbild bereits unter Berücksichtigung der Bewegung des mobilen Gerätes nach der ersten Positionsbestimmung erstellt wird.

Um einen Abgleich zwischen dem Zeitpunkt des Erfassens der Position und dem Zeitpunkt des Erfassens der Bildinformation durchführen zu können, sind zunächst Zeitinformationen für die Zeit zu erfassen, zu denen die Positionsinformationen erfasst werden. Daher wird, wenn die Positionsinformation erfasst wird, zusätzlich eine Zeitinformation erfasst. Diese Zeitinformation reflektiert die Zeit, zu der die Positionsinformation erfasst wurde. Die Zeitinformation kann als sogenanntes "Time Stamp" bereitgestellt werden. In dem Moment, zu dem zunächst die Position im Raum bestimmt wird, wird die Zeitinformation erfasst.

Anschließend kann, wie bereits erläutert, das Gerät gegebenenfalls zunächst bewegt werden und erst nach einer gewissen Zeit die Bildinformation erfasst werden. Um einen entsprechenden Abgleich der Positionen durchführen zu können, wird auch eine Zeitinformation für den Zeitpunkt erfasst, zu dem die Bildinformationen erfasst werden. Die zunächst bestimmte Position kann dann angepasst werden, in dem die Bewegungsinformationen ausgewertet werden, die zwischen dem Zeitpunkt des Erfassens der Positionsinformation und dem Zeitpunkt des Erfassens der Bildinformation angefallen sind. Mit Hilfe der Bewegungsinformation kann die Positionsverschiebung in dem Zeitraum zwischen dem Erfassen der Positionsinformation und dem Erfassen der Bildinformation bestimmt werden und die Position entsprechend angepasst werden.

Der simulierte Raum ist einerseits durch seine Außenwände begrenzt und andererseits durch Gegenstände innerhalb des Raumes gekennzeichnet. Die Gegenstände können bei der Simulation in dem Raum entsprechend ihrer tatsächlichen Position positioniert werden. Hierbei können zunächst Flächen und Formen mit einer monochromen Oberfläche simuliert werden. Für einen besseren Bildabgleich können darüber hinaus auch Gegenstände des Raums farbig und/oder als Bild in dem Raum projiziert werden. Bilder können in der Form von Texturen auf die simulierten Oberflächen gelegt werden, um somit den Raum möglichst realitätsgetreu abbilden zu können.

Der Raum wird zunächst dreidimensional simuliert. Anschließend kann abhängig von beispielsweise der Positionsinformation und zusätzlich beispielsweise auch von der Ausrichtungsinformation, insbesondere einem Vektor, welcher repräsentativ für eine optische Achse ist, ein zweidimensionales Abbild aus dieser Simulation erstellt werden. In diesem zweidimensionalen Abbild wird ein zweidimensionales Bild des dreidimensionalen Raumes simuliert, welches sich bei einer Betrachtung des Raumes entlang der Blickrichtung (dem Vektor) ausgehend von der bestimmten Position ergibt. Hierbei können auf den Gegenständen des Raumes Bilder projiziert werden, insbesondere können die Gegenstände mit Bildinformationen texturiert werden.

Nicht nur die Form von Gegenständen kann simuliert werden, sondern auch Flächen der Gegenstände. Diese können insbesondere mit Texturen überzogen werden, die aus Bildern gewonnen wurden, die von den entsprechenden Flächen aufgenommen wurden.

Ein weiterer, unabhängiger Aspekt, welcher mit allen hier beschriebenen Merkmalen und Ansprüchen kombinierbar ist, ist ein Verfahren zur Positionsbestimmung in einem Raum, umfassend Ausmessen eines Raumes mittels eines aktiven Funktransponders, Identifizieren von Objekten in dem Raum, Erfassen der aktuellen Position des Objektes mit Hilfe des Funktransponders zusammen mit dem Objekt und Übermitteln der aktuellen Position zusammen mit einer Objektkennung an eine Zentrale. Zum Ausmessen des Raumes kann ein Funktransponder verwendet werden. Dieser kann beispielsweise mittels RFID-Technologie eine Position besonders genau, insbesondere mit einer Genauigkeit von +/- 2 cm bestimmen. Dann kann für ein Objekt in dem Raum zunächst dieses identifiziert werden und anschließend das Objekt mit der aktuellen Position verknüpft werden. Dies kann für viele oder alle Objekte in einem Raum geschehen, so dass für jedes erfasste Objekt eine exakte Position mit einer Abweichung von wenigen Zentimetern bekannt ist. Diese Information kann an eine Zentrale übermittelt werden.

Die Information zu der Position in dem Raum zusammen mit der Information zu dem Objekt ermöglicht es, den Raum in der Simulation mit entsprechenden Objekten zu bestücken. Zu jedem Objekt existieren bevorzugt Bilder aus verschiedenen Blickwinkeln. Unter Verwendung dieser Bilder können die Objekte simuliert werden und in dem Raum entsprechend der erfassten Position positioniert werden. Dann wird in der Simulation des Raumes nicht nur die Kontur des Raumes simuliert, sondern der Raum wird zusammen mit den dort angeordneten Objekten simuliert. Bei der Erstellung des Abbildes erscheinen dann auch die simulierten Objekte in dem Abbild und das simulierte Abbild entspricht besser einem tatsächlichen Bild des Raumes als ohne die Verwendung der Objekte.

Ein Objekt kann unterschiedlich identifiziert werden, beispielsweise unter Verwendung eines Barcodes, eines QR-Codes, eines RFID-Codes oder eines anderen gängigen Codes.

Wie bereits erläutert, kann von Objekten eine Mehrzahl an Ansichten fotographisch abgebildet sein. Unter Verwendung dieser Bilder der Objekte lassen sich die Objekte in dem Abbild projizieren.

Wie bereits erläutert, werden in der Simulation der Raum sowie Objekte und Gegenstände in dem Raum als auch deren Position modelliert. Wird dann ein Abbild simuliert, kann in diesem Abbild nicht nur der Raum, sondern auch die darin vorhandenen Gegenstände und Objekte simuliert werden und somit ein positionsabhängiges Abbild des Raumes berechnet werden.

Schließlich eignet sich die erlangte Kenntnis der aktuellen, genauen Position des mobilen Gerätes dazu, die Bildinformation mit virtuellen Informationen anzureichern. Diese sogenannte Augmente-Reality ermöglicht es, abhängig von der angepassten Position zumindest einen virtuellen Gegenstand oder eine virtuelle Information in einem Display einzublenden, der exakt einem Objekt zugeordnet sein kann. Somit kann beispielsweise für bestimmte Objekte eine Preisangabe, eine Inhaltsstoffangabe, eine Werbung oder dergleichen virtuell angezeigt werden.

Nachfolgend wird der Gegenstand anhand einer Ausführungsbeispiele zeigenden Zeichnung näher erläutert. In der Zeichnung zeigen:
- Fig. 1a-d: ein Verfahren zur Positionsbestimmung;
- Fig. 2a,b: das Erfassen von Bildinformationen;
- Fig. 3a,b: der Vergleich zwischen einem simulierten Abbild und den Bildinformationen;
- Fig. 4: ein Anpassen der Position;
- Fig. 5: das Anreichern von Bildinformationen;
- Fig. 6a, b: die Positionsbestimmung von Objekten;
- Fig. 7: ein Abbild mit Objekten;
- Fig. 8: ein Anreichern von Bildinformationen.

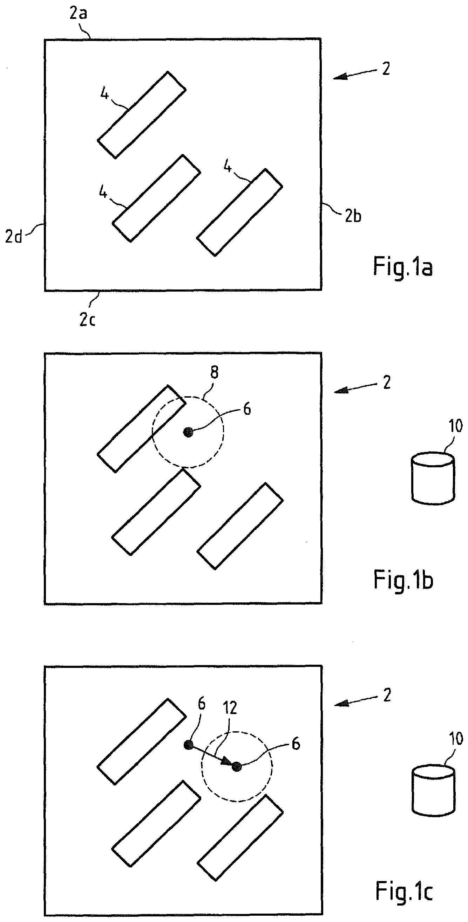

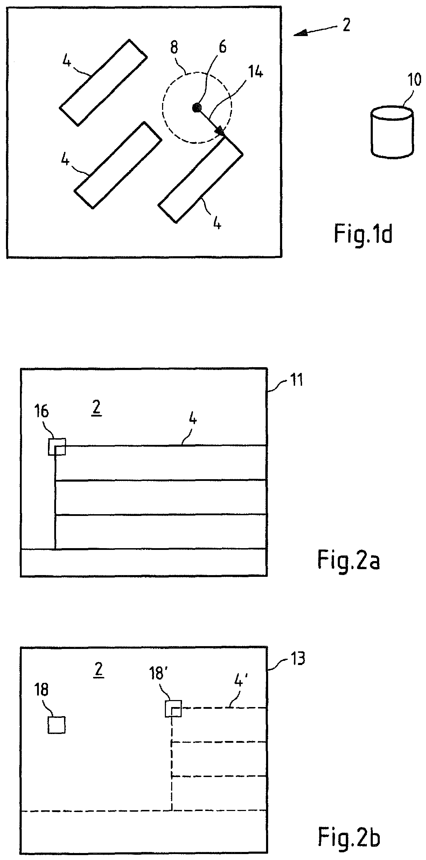

Fig. 1 zeigt in einer Draufsicht auf einen Raum 2. Der Raum 2 ist nachfolgend nur zweidimensional dargestellt. Der Raum 2 ist durch Seitenwände 2a-d, einen Boden und eine Decke begrenzt.

In dem Raum 2 sind Gegenstände 4 angeordnet. Die Gegenstände 4 sind beispielsweise Regale.

Fig. 1b zeigt beispielhaft ein mobiles Gerät 6, dessen Position bestimmt werden soll. Zunächst wird das mobile Gerät 6 mit Hilfe von bekannten Innenraumpositionierungsverfahren, wie beispielsweise der Verwendung von Funkinformationen, beispielsweise Bluetooth oder WLAN, seine ungefähre Position bestimmen. Die Positionsbestimmung ist derart ungenau, dass die Position des mobilen Gerätes 6 mit einer Unschärfe von bis zum 2m behaftet ist, was durch den Kreis 8, der das mobile Gerät 6 umgibt, angedeutet wird. Das mobile Gerät 6 könnte an jeder Stelle innerhalb des Kreises 8 sein, was durch die Unschärfe der Positionsbestimmung bedingt ist.

Auch ist es möglich, das mobile Gerät 6 genauer zu orten, wenn ein zusätzlicher 3D Sensor zum Einsatz kommt. Im Kreis 8 kann der 3D Sensor z.B. mehrere Objekte, insbesondere Personen oder sich bewegende Objekte erkennen. Diese Objekte können "getrackt", als verfolgt werden. Dadurch lassen sich einem/jedem Objekt Bewegungsinformationen zuordnen. Dies kann im einfachsten Fall nur die Information sein "Bewegung ja/nein" sein. Weitere Bewegungsinformationen können Beschleunigung, Neigung, Geschwindigkeit etc. sein. Parallel dazu kann das mobile Gerät 6 auch Bewegungsinformationen sammeln. Diese können im einfachsten Fall nur die Information sein "Bewegung ja/nein" sein. Weitere Bewegungsinformationen können Beschleunigung, Neigung, Geschwindigkeit etc. sein

Vergleicht man nun für jedes Objekt diese beiden Bewegungsinformationen des 3D Sensors und des mobilen Gerätes 6 zu zumindest einem Zeitpunkt, insbesondere zu mehreren Zeitpunkten, lässt sich das mobile Gerät 6 bzw. die Person, die das Gerät 6 mit sich führt ("Zielperson"), unter den durch den 3D Sensor erfassten Objekten bestimmen.

Anschließend kann der Kreis 8 durch die Positionsinformation des 3D Sensors genauer bestimmt werden und nachfolgend verwendet werden.

Die Position des mobilen Gerätes 6 gemäß der Fig. 1b wird zu einem Zeitpunkt A bestimmt. Das mobile Gerät 6 sendet Positionsinformationen als auch entsprechende Zeitinformationen an einen zentralen Rechner 10. Auch kann das mobile Gerät lediglich die Positionsinformationen an den zentralen Rechner 10 übermitteln.

In der Fig. 1c ist dargestellt, dass sich das mobile Gerät 6 entlang des Bewegungsvektors 12 bewegt. Die Bewegung bzw. der Bewegungsvektor 12 kann mit Hilfe von Accelerometern oder sonstigen Initialsensoren innerhalb des mobilen Gerätes 6 erfasst werden. Zum Zeitpunkt B ist das mobile Gerät 6 um den Bewegungsvektor 12 von einer ursprünglichen Position in eine zweite Position bewegt worden.

Zum Zeitpunkt A wurde die Position des mobilen Gerätes 6 bestimmt. Zum Zeitpunkt B wird nun, wie in der Fig. 1d dargestellt, eine Bildinformation durch das mobile Gerät 6 erfasst. Die zum Zeitpunkt A bestimmte Position wird um den Bewegungsvektor 12 angepasst, so dass die Position zum Zeitpunkt B der Position zum Zeitpunkt A verschoben um den Bewegungsvektor 12 entspricht.

Fig. 1d zeigt das mobile Gerät 6 zum Zeitpunkt B. Zu diesem Zeitpunkt wird eine Ausrichtungsinformation des mobilen Gerätes 6 erfasst. Dies kann mit Hilfe eines Kompasses erfolgen. Neben der Richtung, in welche das mobile Gerät 6 zeigt, kann auch eine Neigung erfasst werden. Hierfür kann beispielsweise ein Neigungssensor in dem mobilen Gerät 6 verwendet werden. Unter Ausnutzung der Ausrichtungsinformationen kann eine optische Achse 14 einer Kamera des mobilen Gerätes bestimmt werden. Die optische Achse 14 weist in die Richtung, in welche die Kamera des mobilen Gerätes 6 eine Aufnahme machen wird.

Zum Zeitpunkt B ist die Position des mobilen Gerätes 6 nach wie vor ungenau, was durch den Kreis 8 angedeutet ist.

Das mobile Gerät 6 kann das Bild sowie die Richtungsinformation in Form eines die optische Achse 14 repräsentierenden Vektors an die Zentrale 10 übermitteln.

Mit Hilfe der Kamera des mobilen Gerätes 6 wird eine Aufnahme 11, wie sie in der Fig. 2a dargestellt ist, aufgenommen. In der Aufnahme 11 gemäß Fig. 2a ist der Gegenstand 4 zu erkennen. Der Gegenstand 4 ist ein Regal mit Regalböden und in einer bestimmten Position innerhalb des Bildes angeordnet. Die Position und Größe des Gegenstands 4 in dem Bild 11 ergibt sich aus der Position des mobilen Gerätes 6 als auch dessen optische Achse 14.

Ausgehend von der ungenau bestimmten Position des mobilen Gerätes 6 sowie der bestimmten optischen Achse 14 wird ein Abbild 13 des Raumes, wie in Fig. 2b dargestellt simuliert. In dem in Fig. 2b simulierten Abbild 13 ist der Gegenstand 4' abgebildet. Dieser Gegenstand 4' entspricht der erwarteten Positionierung unter der Annahme der zuvor bestimmten Position des mobilen Gerätes 6 als auch der optischen Achse 14.

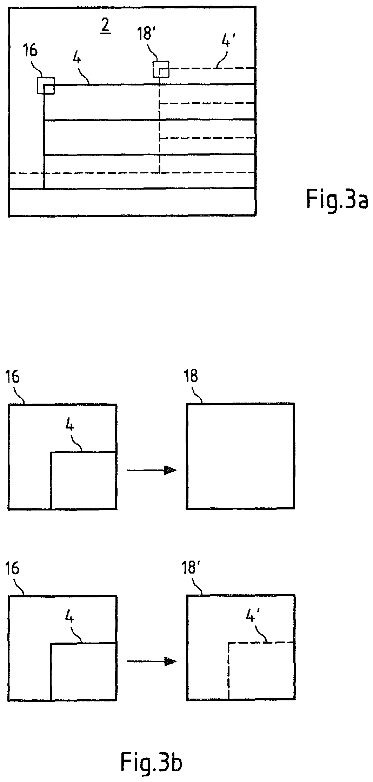

Fig. 3a zeigt den Vergleich des Bildes 11 gemäß der Fig. 2a mit dem simulierten Abbild 13 gemäß der Fig. 2b. Zu erkennen ist, dass eine Verschiebung zwischen dem Abbild 13 des Gegenstands 4' und dem Bild 11 des Gegenstands 4 vorhanden ist. Um die entsprechende Verschiebung bestimmen zu können, kann das Bild 11 als auch das Abbild 13 in einzelne Blöcke 16, 18, 18' unterteilt werden.

Anschließend kann, wie in der Fig. 3b gezeigt, ein Vergleich der Blöcke erfolgen. Dabei ist es beispielsweise möglich, den Block 16 des Bildes 11 mit dem Block 18 des Abbildes 13 zu vergleichen und auch den Block 16 mit dem Block 18' des Abbildes 13. Insbesondere erfolgt ein Vergleich eines einzelnen Blocks 16 des Bildes 11 mit umliegenden Blöcken 18, 18' des Abbildes. Die Anzahl der zu vergleichenden Blöcke kann variabel sein, insbesondere kann ein Suchbereich eingestellt werden, der beispielsweise neun, 25, 49 den Block 16 umgebende Blöcke 18, 18' umfassen kann. Ein Block 16, 18 kann aus vier, acht, sechszehn, zweiunddreißig oder mehr Pixeln gebildet werden. Der Suchbereich kann auch mehr umgebende Blöcke beinhalten als oben angegeben.

Innerhalb eines jeden Blocks 16, 18, 18' wird beispielsweise eine Kantenkennung durchgeführt und ein Vergleich der erkannten Kanten durchgeführt. In der Fig. 3b ist zu erkennen, dass in dem Block 18 keine Kante vorhanden ist, da in dem simulierten Abbild 13 der Gegenstand 4' im Bereich des Blockes 18 nicht vorhanden ist. Dies führt dazu, dass die Blöcke 16, 18 als unähnlich qualifiziert werden.

In Fig. 3b ist in der zweiten Zeile dargestellt, dass bei einem Vergleich des Blocks 16 mit einem verschobenen Block 18' in dem Abbild 13 eine Ähnlichkeit festgestellt werden kann. Der Abstand zwischen dem Block 16 und dem Block 18' kann als Verschiebungsvektor verstanden werden.

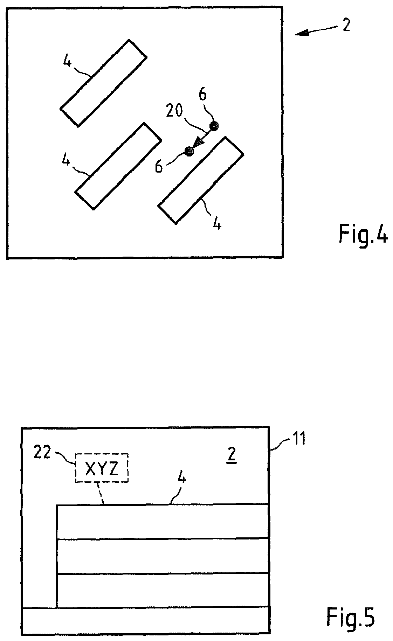

Wird die Position des mobilen Gerätes 6, wie in der Fig. 4 dargestellt abhängig von dem Verschiebungsvektor 20 verschoben, so entspricht das Bild 11 gemäß der Fig. 2a dem simulierten Abbild 13 gemäß der Fig. 2b, d.h. die Gegenstände 4, 4' sind kongruent zueinander. Durch dieses Verschieben kann die Position des mobilen Gerätes 6 genauer bestimmt werden, da das tatsächliche Bild gemäß der Fig. 2a den tatsächlichen Standort bzw. die tatsächliche Position des Gerätes 6 festlegt und die Simulation des Abbildes 13 dieser tatsächlichen Position entsprechen muss.

Nachdem die Position abhängig vom dem Verschiebungsvektor 20 angepasst wurde, kann in einem Display des mobilen Gerätes 6 beispielsweise in dem Abbild 13 des Gegenstandes 4 eine virtuelle Information 22 angezeigt werden. Diese virtuelle Information 22 kann als Augmented-Reality verstanden werden und kann zu den Gegenständen passen, die in dem Bild 11 zu sehen sind. Da die Position exakt bestimmt wurde, sind auch die Gegenstände in dem Bild 11 bekannt und lassen sich mit Hilfe von virtuellen Informationen erläutern.

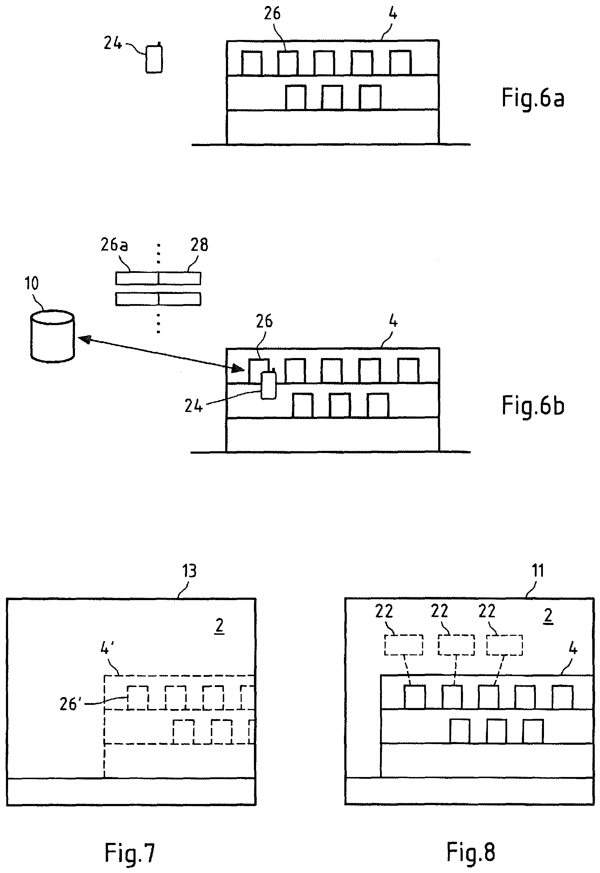

Fig. 6a, b zeigt die Bestimmung der Position von Gegenständen. Mit Hilfe eines Positionsbestimmungsgeräts 24, welches beispielsweise mittels RFID oder sonstiger Funktechnologie eine hochgenaue Positionierungserkennung durchführen kann, kann ein Nutzer in einem Raum 2 Objekte 26 einer Position zuordnen. Hierfür wird das Positionsbestimmungsgerät 24 an jeweils eines der Objekte 26 bewegt und mit Hilfe eines Lesegerätes eine Objektkennung ausgelesen. Das Lesegerät ist nicht dargestellt und kann beispielsweise ein optischer Scanner oder ein Funkscanner sein. Eine Objektkennung kann beispielsweise ein Barcode, ein 2D-Code, ein QR-Code, ein RFID-Code oder dergleichen sein. Wird mit dem Lesegerät die Objektkennung erkannt, so kann das Positionsbestimmungsgerät ein Signal ausgeben. Dies kann ein akustisches Signal sein.

Anschließend kann durch den Benutzer getriggert oder auch automatisch die durch das Positionsbestimmungsgerät 24 exakt bestimmte Position zusammen mit der entsprechenden Objektkennung an den zentralen Rechner 10 übermittelt werden. Somit kann ein Datensatz bestehend aus Objektkennung 26a und Position 28 von dem Positionsbestimmungsgerät 24 an den zentralen Rechner 10 übermittelt werden.

In Fig. 6b ist angedeutet, dass dies für jedes einzelne Objekt 26 durchgeführt werden kann und jeweils ein Tupel aus Objektkennung und Position übermittelt werden kann.

Mit Hilfe des in den Fig. 6a und b gezeigten Verfahrens ist es möglich, exakte Positionen von Objekten 26 zu ermitteln.

Neben den Positionen der Objekte 26 können Bildinformationen zu den Objekten 26 in den zentralen Rechner 10 hinterlegt sein. Diese Bildinformationen können den Objekten zugeordnet werden und bei der Simulation des Abbildes 13 verwendet werden.

Fig. 7 zeigt ein solches Beispiel. Hierin sind die Objekte 26 in einer Simulation als simulierte Objekte 26' in dem simulierten Regal 4' angeordnet. Neben der Positionierung der Objekte 26 können die Oberflächen beispielsweise mit Hilfe der Bildinformationen zu den Objekten 26 mit einer Textur überzogen sein.

Die Positionserkennung entsprechend dem Bildvergleich in den Fig. 3 und 4 wird natürlich durch die zusätzlichen Informationen zu den Objekten 26 erheblich genauer.

Darüber hinaus kann jedem einzelnen Objekt 26 in dem Bild 11 eine virtuelle Information 22 zugeordnet werden. Somit lässt sich die Augmented-Reality auch auf Objektebene sehr genau realisieren. Jedem einzelnen Objekt 26 kann in dem Bild 11 eine entsprechende virtuelle Information zugeordnet werden, was den Informationsgehalt für den Nutzer erheblich steigert.

### Bezugszeichenliste

- 2: Raum
- 2a-d: Seitenwände
- 4: Gegenstände
- 6: Mobiles Gerät
- 8: Kreis AB Zeitpunkt
- 10: Zentraler Rechner
- 11: Bild
- 12: Bewegungsvektor
- 13: Abbild
- 14: Optische Achse
- 16, 18: Block
- 20: Verschiebungsvektor
- 22: Virtuelle Information
- 24: Positionsbestimmungsgerät
- 26: Projekt
- 26a: Objektkennung
- 28: Positionsdaten

## Patentansprüche

1. Verfahren zur Positionsbestimmung eines mobilen Gerätes, insbesondere in einem Ladenlokal, umfassend:
- Bestimmen einer Position des mobilen Gerätes in einem Raum unter Verwendung zumindest eines ersten Innenraumpositionierungsverfahren,
- Erfassen einer Bildinformation mit dem mobilen Gerät,
- Vergleichen des erfassten Bildinformation mit zumindest einem simulierten Abbild des Raumes,
- Anpassen der Position abhängig von dem Vergleich,
**dadurch gekennzeichnet,**
**dass** zusammen mit der Bildinformation eine Ausrichtungsinformation des mobilen Gerätes erfasst wird und dass abhängig von der Ausrichtungsinformation das Abbild des Raumes simuliert wird.

2. Verfahren nach Anspruch 1,
**dadurch gekennzeichnet,**
- **dass** das Innenraumpositionierungsverfahren zumindest eines der nachfolgenden Verfahren umfasst,
- Radiofrequenzpositionierungsverfahren,
- Magnetfeldpositionierungsverfahren,
- Akustikpositionierungsverfahren.

3. Verfahren nach einem der vorangehenden Ansprüche,
**dadurch gekennzeichnet,**
- **dass** Bewegungsinformationen mit einem Inertialsensor in dem mobilen Gerät erfasst werden und dass die Positionsinformation zusätzlich abhängig von den Bewegungsinformationen angepasst wird.

4. Verfahren nach einem der vorangehenden Ansprüche,
**dadurch gekennzeichnet,**
- **dass** zusammen mit der Positionsinformationen eine Zeitinformation erfasst wird und dass zunächst die Position im Raum für den Zeitpunkt der Erfassung der Positionsinformation bestimmt wird und insbesondere dass anschließend die so bestimmte Position, abhängig von Bewegungsinformationen die zwischen dem Zeitpunkt des Erfassens der Positionsinformationen und dem Zeitpunkt des Erfassens der Bildinformationen erfasst wurden, angepasst wird.

5. Verfahren nach einem der vorangehenden Ansprüche,
**dadurch gekennzeichnet,**
- **dass** in dem Abbild Raumes Flächen von Gegenständen und/oder Wänden abgebildet sind.

6. Verfahren nach einem der vorangehenden Ansprüche,
**dadurch gekennzeichnet,**
- **dass** in dem Abbild Raumes Bilder von Gegenständen in dem Raum projiziert sind.

7. Verfahren nach einem der vorangehenden Ansprüche,
**dadurch gekennzeichnet,**
- **dass** das Abbild des Raumes ein zweidimensionales Abbild aus einer dreidimensionalen Simulation ist.

8. Verfahren nach einem der vorangehenden Ansprüche,
**dadurch gekennzeichnet,**
- **dass** in der Simulation des Raumes Gegenstände simuliert sind und dass in dem Abbild Flächen der Gegenstände simuliert sind.

9. Verfahren zur Positionsbestimmung in einem Raum umfassend,
- Ausmessen eines Raumes mittels eines aktiven Funktransponders,
- Identifizieren von Objekten in dem Raum,
- Erfassen der aktuellen Position des Objektes mit Hilfe des Funktransponders zusammen mit dem Objekt,
- Übermitteln der aktuellen Position zusammen mit einer Objektkennung an eine Zentrale,
- wobei eine dreidimensionale Simulation des Raumes modelliert wird, wobei Gegenstände und deren Positionen im Raum modelliert werden und
- wobei anschließend aus der Simulation des Raumes ein jeweils positionsabhängiges Abbild des Raumes berechnet wird.

10. Verfahren nach einem der vorangehenden Ansprüche,
**dadurch gekennzeichnet,**
- **dass** das Objekt mit Hilfe zumindest eines
- Barcodes,
- QR Codes und/oder
- RFID Codes,
identifiziert wird.

11. Verfahren nach einem der vorangehenden Ansprüche,
**dadurch gekennzeichnet,**
- **dass** in dem Abbild ein Bild eines identifizierten Objekts projiziert wird.

12. Verfahren nach einem der vorangehenden Ansprüche,
**dadurch gekennzeichnet,**
- **dass** in einem erfassten Bild des mobilen Gerätes abhängig von der angepassten Position zumindest ein virtueller Gegenstand eingeblendet wird und das so angereicherte Bild auf einem Bildschirm des mobilen Gerätes zur Anzeige gebracht wird.

13. Mobiles Gerät eingerichtet zur Durchführung einer Positionsbestimmung, nach einem Verfahren nach einem der vorangehenden Ansprüche, umfassend:
- Positionsbestimmungsmittel eingerichtet zum Bestimmen einer Position des mobilen Gerätes in einem Raum unter Verwendung zumindest eines ersten Innenraumpositionierungssensors,
- Bilderfassungsmittel eingerichtet zum Erfassen einer Bildinformation,
- Vergleichsmittel eingerichtet zum Vergleichen des erfassten Bildinformation mit zumindest einem simulierten Abbild des Raumes,
- Rechenmittel eingerichtet zum Anpassen der ersten Position abhängig von dem Vergleich,
**dadurch gekennzeichnet,**
- **dass** Bilderfassungsmittel zusammen mit der Bildinformation eine Ausrichtungsinformation des mobilen Gerätes erfassen und dass das simulierte das Abbild des Raumes abhängig von der Ausrichtungsinformation ist.

14. Applikationsprogramm zur Ausführung auf einem mobilen Gerät umfassend Programmcode, um einem Prozessor des mobilen Gerätes zur Durchführung eines Verfahrens nach einem der vorangehenden Ansprüche anzusteuern.

## Claims

1. Method for determining the position of a mobile device, in particular in a store, comprising:
- determining a position of the mobile device in a room using at least a first indoor positioning method,
- acquiring image information with the mobile device,
- comparing the acquired image information with at least one simulated image of the room,
- adjusting the position depending on the comparison,
**characterized in that**
together with the image information an orientation information of the mobile device is acquired and that depending on the orientation information the image of the room is simulated.

2. Method according to claim 1,
**characterized in that**
- the interior positioning method comprises at least one of the following methods,
- radio frequency positioning method,
- magnetic field positioning method,
- acoustic positioning method.

3. Method according to any one of the preceding claims,
**characterized in that**
- movement information is detected with an inertial sensor in the mobile device and that the position information is additionally adapted depending on the movement information.

4. Method according to any one of the preceding claims,
**characterized in that**
- time information is acquired together with the position information, and **in that** first the position in the room is determined for the time at which the position information is acquired, and in particular **in that** the position determined in this way is subsequently adapted as a function of movement information acquired between the time at which the position information is acquired and the time at which the image information is acquired.

5. Method according to any one of the preceding claims,
**characterized in that**
- surfaces of objects and/or walls are displayed in the image of the room.

6. Method according to any one of the preceding claims,
**characterized in that**
- images of objects in the room are projected in the image of the room.

7. Method according to any one of the preceding claims,
**characterized in that**
- the image of the room is a two-dimensional image from a three-dimensional simulation.

8. Method according to any one of the preceding claims,
**characterized in that**
- objects are simulated in the simulation of the room and that surfaces of the objects are simulated in the image.

9. Method for position determination in a room comprising,
- measuring a room by means of an active radio transponder,
- identifying objects in the room,
- detecting the current position of the object using the radio transponder together with the object,
- transmitting the current position together with an object identifier to a control center
- wherein a three-dimensional simulation of the room is modeled, wherein objects and their positions in the room are modeled, and
- wherein subsequently a respective position-dependent image of the room is calculated from the simulation of the space.

10. Method according to any one of the preceding claims,
**characterized in that**
- the object is identified with the aid of at least one
- barcode,
- QR codes and/or
- RFID codes,
is identified.

11. Method according to any one of the preceding claims,
**characterized in that**
- an image of an identified object is projected in the image.

12. Method according to any one of the preceding claims,
**characterized in that**
- at least one virtual object is superimposed in a captured image of the mobile device depending on the adjusted position, and the image thus enriched is displayed on a screen of the mobile device.

13. Mobile device arranged for performing a position determination, in particular according to a method according to one of the preceding claims, comprising:
- position determining means arranged to determine a position of the mobile device in a room using at least a first indoor positioning sensor,
- image capturing means adapted to capture an image information,
- comparison means arranged to compare the acquired image information with at least one simulated image of the room,
- computing means arranged for adjusting the first position depending on the comparison,
**characterized in that**
- image capturing means together with the image information capture an orientation information of the mobile device and that the simulated image of the room is dependent on the orientation information.

14. Application program for execution on a mobile device comprising program code for operating a processor of the mobile device to perform a method according to any one of the preceding claims.

## Revendications

1. Procédé de détermination de position d'un appareil mobile, en particulier dans un local commercial, comprenant :
- détermination d'une position de l'appareil mobile dans un espace en utilisant au moins un premier procédé de positionnement intérieur,
- saisie d'une information d'image avec l'appareil mobile,
- comparaison de l'information d'image saisies avec au moins une image simulée de l'espace,
- ajustement de la position en fonction de la comparaison,
**caractérisé en ce**
**qu'**une information d'orientation de l'appareil mobile est saisie avec l'information d'image et que l'image de la pièce est simulée en fonction de l'information d'orientation.

2. Procédé selon la revendication 1,
**caractérisé en ce**
- **que** le procédé de positionnement intérieur comprend au moins l'un des procédés suivants,
- procédé de positionnement par radiofréquence,
- procédé de positionnement par champ magnétique,
- procédé de positionnement acoustique.

3. Procédé selon l'une des revendications précédentes,
**caractérisé en ce**
- **que** des informations de mouvement sont détectées par un capteur inertiel dans l'appareil mobile et que l'information de position est en outre adaptée en fonction des informations de mouvement.

4. Procédé selon l'une des revendications précédentes,
**caractérisé en ce**
- **qu'**une information de temps est saisie avec l'information de position et que la position dans l'espace est d'abord déterminée pour l'instant de saisie de l'information de position et en particulier que la position ainsi déterminée est ensuite adaptée en fonction des informations de mouvement qui ont été saisies entre l'instant de saisie de l'information de position et l'instant de saisie de l'information d'image.

5. Procédé selon l'une des revendications précédentes,
**caractérisé en ce**
- **que** des surfaces d'objets et/ou de murs sont représentées dans l'image de l'espace.

6. Procédé selon l'une des revendications précédentes,
**caractérisé en ce,**
- **que** des images d'objets dans l'espace sont projetées dans l'image de l'espace.

7. Procédé selon l'une des revendications précédentes,
**caractérisé en ce**
- **que** l'image de l'espace est une image bidimensionnelle issue d'une simulation tridimensionnelle.

8. Procédé selon l'une des revendications précédentes,
**caractérisé en ce**
- **que** des objets sont simulés dans la simulation de l'espace et que des surfaces des objets sont simulées dans l'image.

9. Procédé de détermination de la position dans un espace comprenant,
- mensuration d'un espace au moyen d'un transpondeur radio actif,
- identification d'objets dans l'espace,
- détection de la position actuelle de l'objet à l'aide du transpondeur radio avec l'objet,
- transmission de la position actuelle avec une identification de l'objet à une centrale
- où une simulation tridimensionnelle de l'espace est modélisée, où les objets et leurs positions dans l'espace sont modélisés et
- une image de l'espace dépendant de la position est ensuite calculée à partir de la simulation de l'espace.

10. Procédé selon l'une des revendications précédentes,
**caractérisé en ce**
- **que** l'objet est identifié à l'aide d'au moins un
- code à barres,
- codes QR et/ou
- code RFID,
est identifié.

11. Procédé selon l'une des revendications précédentes,
**caractérisé en ce**
- **qu'**une image d'un objet identifié est projetée dans l'image.

12. Procédé selon l'une des revendications précédentes,
**caractérisé en ce**
- **qu'**au moins un objet virtuel est superposé dans une image saisie de l'appareil mobile en fonction de la position adaptée et l'image ainsi enrichie est affichée sur un écran de l'appareil mobile.

13. Appareil mobile configuré pour effectuer une détermination de position, en particulier selon un procédé selon l'une des revendications précédentes, comprenant :
- des moyens de détermination de position configurés pour déterminer une position de l'appareil mobile dans un espace en utilisant au moins un premier capteur de positionnement intérieur,
- des moyens de saisie d'image configurés pour saisir une information d'image,
- des moyens de comparaison configurés pour comparer les informations d'image saisies avec au moins une image simulée de l'espace,
- des moyens de calcul configurés pour adapter la première position en fonction de la comparaison,
**caractérisé en ce**
- **que** des moyens de saisie d'image saisissent, avec l'information d'image, une information d'orientation de l'appareil mobile et que l'image simulée de l'espace dépend de l'information d'orientation.

14. Programme d'application pour l'exécution sur un appareil mobile, comprenant un code de programme pour commander un processeur de l'appareil mobile afin d'effectuer un procédé selon l'une des revendications précédentes.
